# EUROPÄISCHE PATENTANMELDUNG

(11) **EP 1 503 481 A2**
(43) Veröffentlichungstag der Anmeldung: **02.02.2005**
(21) Anmeldenummer: 04016949.2
(22) Anmeldetag: 19.07.2004
(51) Int. Cl.: H02K 7/00, H02K 11/04

(54) **Elektrischer Radantrieb**

(30) Priorität: 19.07.2003 DE 10332885
(71) Anmelder: ZF FRIEDRICHSHAFEN Aktiengesellschaft, 88038 Friedrichshafen (DE)
(72) Erfinder: Gerspacher, Jörg, 88045 Friedrichshafen (DE)

(57) **Zusammenfassung**

In einem elektrischen Radantrieb (1) mit mindestens einem Antriebsmotor (2) und mindestens einem Wechselrichter (3) sind Wechselrichter (3) in einer Achsbrücke (4) integriert.

## Beschreibung

Die Erfindung betrifft einen elektrischen Radantrieb nach der im Oberbegriff von Anspruch 1 näher definierten Art.

Elektrische Radantriebe werden vorzugsweise in Niederfluromnibussen oder Flurförderfahrzeugen verwendet, bei welchen jedes angetriebene Fahrzeugrad einen eigenen Antriebsmotor aufweist. Der elektrische Radantrieb besteht aus einem Elektromotor, vorzugsweise Asynchronmotor, der über ein nachgeschaltetes Getriebe das Fahrzeugrad direkt antreibt. Asynchronmotoren sind mechanische sehr robust und besitzen eine hohe Überlastbarkeit. Ihre hohe Maximaldrehzahl gestattet den Verzicht auf ein Schaltgetriebe, was den Fahrkomfort besonders für den Fahrer, aber auch für die Passagiere deutlich steigert. Charakteristisch für einen solchen elektrischen Radantrieb ist das hohe Drehmoment bei kleinen Drehzahlen und eine konstante Leistung mit abfallendem Drehmoment an einer Grenzdrehzahl. Die Regelung der Asynchronmotoren erfolgt feldorientiert. Die Umformung der z. B. von einer Fahrzeugbatterie, einer Brennstoffzelle oder einem Generator mit Gleichrichter bereitgestellten Gleichspannung in eine Wechselspannung erfolgt durch Wechselrichter, die vor allem unempfindlich gegenüber Fehlbedienungen sind.

Die aus dem Stand der Technik bekannten elektrischen Radantriebe weisen Wechselrichter auf, die sich in einem separaten Gehäuse befinden. Der Wechselrichter kann innerhalb, z.B. in einem Maschinenraum oder außerhalb, beispielsweise auf einem Fahrzeugdach,des Fahrzeuges montiert werden. Die Verbindung zum Elektromotor muss über Leistungskabel erfolgen, die im Falle der Anordnung des Wechselrichters auf dem Fahrzeugdach erhebliche Längen aufweisen. Die Integration einer solchen Lösung in ein Fahrzeug ist mit sehr hohem Aufwand und Kosten verbunden. Der Wechselrichter muss so im Fahrzeug angeordnet werden, dass keine anderen Aggregate bzw. deren Zugänglichkeit behindert wird. Weiterhin darf der Wechselrichter keinen extremen Umweltbedingungen ausgesetzt werden, da diese die Funktionalität negativ beeinflussen können. Ebenso müssen die Leistungskabel vom Wechselrichter zum Antriebsmotor diesen Anforderungen genügen.

Der vorliegenden Erfindung liegt die Aufgabe zugrunde einen elektrischen Radantrieb darzustellen, der leicht in bestehende Fahrzeugkonzepte integriert werden kann und der keine aufwändige Anschlusstechnik benötigt.

Die der Erfindung zugrundeliegende Aufgabe wird durch einen, auch die kennzeichnenden Merkmale des Hauptanspruchs aufweisenden, gattungsgemäßen elektrischen Radantrieb gelöst.

Durch die Integration des Wechselrichters in die Achse des Fahrzeuges können sämtliche Bauteile wie Zwischenkreiskondensatoren, Leistungshalbleiter, Steuer- und Regelplatinen direkt in die vorhandenen Hohlräume der Elektroachse integriert werden. Die Verbindung zwischen Wechselrichter und Fahrzeugmotor sowohl leistungsseitig als auch sensorseitig findet geschützt innerhalb der Achse statt. In einer weiteren Ausgestaltung der Erfindung kann auch auf das Gehäuse der Wechselrichter verzichtet werden, was zu einem zusätzlichen Einsparpotential führt. Durch diese Anordnung kann das elektrischen Antriebssystems leichter im Fahrzeug integriert werden, da der Wechselrichter bereits in der Elektroachse des Fahrzeuges enthalten ist und nicht mehr separat im Fahrzeug untergebracht werden muss. Weiterhin ist die Kabelführung von leistungsführenden Kabel bzw. die Integration von Stromschienen wesentlich vereinfacht. Es muss nur noch der Zwischenkreis und ggfs. ein Kabel für einen Bremswiderstand oder Energiespeicher an die Achse geführt werden. Bei den bisherigen Konzepten mussten für jedem Elektromotor drei Leitungen an die Achse geführt werden. Dies entspricht also einer deutlichen Reduzierung der Anzahl der notwendigen Leitungen, was sich in einer deutlichen Gewichtsersparnis darstellt. Eine weitere Gewichtsersparnis kann durch den Verzicht auf ein Wechselrichtergehäuse erreicht werden. Diese Maßnahmen führen neben einer enormen Gewichtsersparnis auch zu einer Kostenreduzierung. Durch die reduzierte Anzahl an Kabeln und Verschraubungen reduzieren sich auch die möglichen Ausfallkriterien wodurch die Zuverlässigkeit erhöht wird. Da sich Elektromotor und Wechselrichter innerhalb der Achse befinden und durch Metall abgeschirmt sind, ergeben sich gegenüber dem Stand der Technik günstigere EMV-Eigenschaften. Weiterhin vorteilhaft ist die Möglichkeit die komplette Achse mit allen zugehörigen Komponenten vor dem Einbau ins Fahrzeug zu bestücken, wodurch man nur noch einen Zwischenkreis sowie eine Signalverkabelung zur Elektronik vom Fahrzeug anschließen muss.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

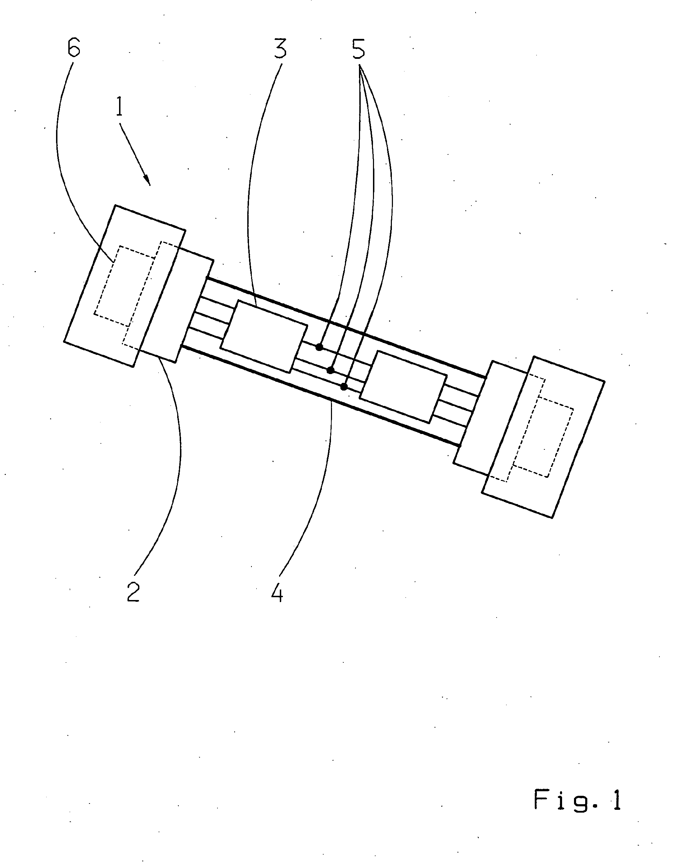

Nachfolgend wird die Erfindung anhand eines in der Figur schematisch dargestellten Ausführungsbeispieles näher erläutert.

Die einzige Figur zeigt einen erfindungsgemäßen elektrischen Radantrieb 1 mit einer Achsbrücke 2, einem Antriebsmotor 3 für ein Fahrzeugrad 4 sowie ein Getriebe 6. Der Antriebsmotor 3 ist über leistungsführende Kabel 5 mit einem Wechselrichter 3 verbunden. Die Achsbrücke 2 wird zur Verlegung der leistungsführenden Kabel 5 verwendet. Innerhalb der Achsbrücke 2 wird eine Verbindung zwischen Wechselrichter 3 und einem nicht dargestellten Fahrzeugmotor, sowohl leistungsseitig als auch sensorseitig vor äußeren Einflüssen und Belastungen geschützt, hergestellt.

### Bezugszeichen

- 1: Radantrieb
- 2: Antriebsmotor
- 3: Wechselrichter
- 4: Achsbrücke
- 5: Kabel
- 6: Getriebe

## Patentansprüche

1. Elektrischer Radantrieb (1) mit mindestens einem Antriebsmotor (2) und mindestens einem Wechselrichter (3) und einer Achsbrücke (4), **dadurch gekennzeichnet, dass** der Wechselrichter (3) in der Achsbrücke (4) integriert ist.

2. Elektrischer Radantrieb (1) nach Anspruch 1, **dadurch gekennzeichnet, dass** eine Verbindung zwischen Wechselrichter (3) und einem Fahrzeugmotor sowohl leistungsseitig als auch sensorseitig geschützt innerhalb der Achsbrücke (2) stattfindet.

3. Elektrischer Radantrieb (1) nach Anspruch 1 oder 2, **dadurch gekennzeichnet, dass** der Wechselrichter (3) kein Gehäuse aufweist.

4. Elektrischer Radantrieb (1) nach einem der vorangegangenen Ansprüche, **dadurch gekennzeichnet, dass** leistungsführende Kabel (5) in der Achsbrücke (4) geführt werden.

5. Elektrischer Radantrieb (1) nach einem der vorangegangenen Ansprüche, **dadurch gekennzeichnet, dass** Stromschienen in der Achsbrücke integriert sind.
